# EUROPEAN PATENT APPLICATION

(11) **EP 2 902 679 A1**
(43) Date of publication of application: **05.08.2015**
(21) Application number: 14153087.3
(22) Date of filing: 29.01.2014
(51) Int. Cl.: F16K 17/04, F16K 1/44, F16K 1/38

(54) **Valve for a subsea pressure canister**

(71) Applicant: Siemens Aktiengesellschaft, 80333 München (DE)
(72) Inventor: Espedalen, Hans, 3613 Kongsberg (NO)

(57) **Abstract**

The present invention relates to a valve (20) for a subsea pressure canister (11). The valve comprises a housing (21) comprising a passage (22) extending between a first port (23) and a second port (24). A first piston (40) is arranged within the passage (22) and movable between a closed and an open position. A first seal (41) provides a sealing between the first piston (40) and the passage (22) in the closed position of the first piston (40). A second piston (42) is arranged within the passage (22) and movable between a closed position and an open position. A second seal (43) provides a sealing between the second piston (42) and the passage (22) in the closed position of the second piston.

## Description

The present invention relates to a valve for a subsea pressure canister, especially to a pressure relief valve for a subsea pressure canister or a subsea vessel.

For subsea applications, for example subsea oil production, subsea energy transmission and subsea telecommunications, equipment to be operated subsea must be adapted to this harsh environment. A major obstacle in deep water is the extreme high pressure experienced by the equipment at these depths. Accordingly, pressure vessels, so-called pressure canisters, may be used to protect equipment at these depths from the high pressure by providing an inside pressure of approximately one atmosphere corresponding approximately 100000 Pascal or 1 bar.

Pressure canisters used subsea to maintain and simulate an ambient pressure similar to what is experienced at the surface are also called one atmosphere chambers, vessels or canisters. A common use for example in the oil industry for such canisters is to protect pressure sensitive components subsea. In the event that a pressure canister leaks slowly while subsea and is then withdrawn back to the surface relatively rapidly, it may contain a pressure higher than the normal atmospheric pressure. When the pressure canister has been withdrawn back from a depths of approximately 3000 metres to the surface, the pressure inside the canister may become extremely large, for example as high as 300 bar (30000000 Pa). When such a pressurized canister has been retrieved from subsea and is opened at the surface, accidents may happen. To achieve a more safe operation, a hydraulic check valve acting as a pressure relief valve may be installed. However, a check valve may introduce a potential leak point for water to enter the interior of the canister.

Therefore, it is an object of the present invention to enhance a safe operation of subsea equipment, especially of a one atmosphere canister.

### Summary of the Invention

According to the present invention, this object is achieved by a valve for subsea pressure canister as defined in claim 1. The dependent claims define further embodiments of the present invention.

According to an embodiment, a valve for a subsea pressure canister is provided. The valve comprises a housing with a passage extending between a first port and a second port of the valve. The housing may be attached at the subsea pressure canister such that the first port is in a fluid communication with an interior of the subsea pressure canister and the second port is in a fluid communication with an environment outside of the subsea pressure canister. Thus, the passage is configured to provide a fluid communication between an interior and an exterior of the subsea pressure canister. The valve comprises furthermore a first piston which is arranged within the passage and which is movable between a closed position and an open position, and a first seal configured to provide a sealing between the first piston and the passage in the closed position of the first piston. The valve comprises furthermore a second piston arranged within the passage and movable between a closed position and an open position, and a second seal to provide a sealing between the second piston and the passage in the closed position of the second piston. In other words, the valve comprises two pistons arranged in the passage, with each piston having a seal for sealing the corresponding piston in its closed position. The first piston and the second piston may be arranged in a serial arrangement such that the first piston and the second piston must be positioned both in their open positions to enable a fluid communication between the first port and the second port, whereas the fluid communication between the first port and the second port is inhibited when at least one of the first piston and second piston is arranged in its closed positioned. By providing two pistons which are each configured to inhibit a fluid communication between the first port and the second port, a reliable sealing in the closed position of the valve can be provided to protect an interior of the subsea pressure canister from the pressurised fluid at an outside of the pressure canister in a subsea environment. Therefore, the two seals provide a double barrier protecting the interior of the subsea pressure canister from high subsea pressure such that the subsea pressure canister may be arranged in a depth of approximately 3000 metres subsea with an interior pressure of approximately one atmosphere. By providing two independent pistons in a serial arrangement, the pressure in the passage between the first piston and the second piston may be balanced by an independent movement of the second piston. This enables each piston to provide an optimized sealing.

According to an embodiment, in the closed position of the first piston, the first seal and the first piston are arranged such that the first port is hydraulically isolated from an intermediate space provided in the passage between the first piston and the second piston. Furthermore, in the closed position of the second piston, the second seal and the second piston are arranged such that the second port is hydraulically isolated from the intermediate space. Therefore, the first seal and the second seal provide a double barrier and the pressure difference between a pressure at the first port and a pressure at the second port is balanced via the intermediate space between the first seal and the second seal. The intermediate space may be filled with a fluid, in particular with a liquid, for example with an oil, e.g. silicon oil. By using a fluid like silicon oil which is hardly compressable, a pressure balance between the first seal and the second seal may be accomplished with an approximately constant volume of the intermediate space in pressurised and non-pressurised conditions. Due to the fluid in the intermediate space, the second seal may be pressure balanced. This compensation may eliminate pressure differentials on the second seal to keep the second seal fit and operational during life time.

According to another embodiment, the first piston is arranged relative to the second piston such that, when the first piston is moving from the closed position to the open position, the first piston displaces the fluid and the fluid displaces the second piston from the closed position to the open position. For example, when the valve is arranged at a subsea pressure canister which has a leak and is retrieved from subsea, there may be a high pressure inside the canister compared to atmospheric pressure outside. Due to the pressure difference between the interior of the pressure canister and the one atmospheric pressure outside the canister, the first piston may be moved from the closed position to the open position. Due to the enclosed intermediate space provided between the first and the second piston, the fluid in the intermediate space is urged by the first piston, and the fluid urges the second piston from the closed position to the open position. The fluid is preferably a liquid, in particular silicon oil. Finally, when both pistons are in the open position, the high pressure inside the subsea pressure canister may be released via the valve.

According to another embodiment, the first piston has a truncated conical shape which provides a first tapered lateral surface. Furthermore, the passage comprises an inner wall section which has a truncated conical shape providing a second tapered lateral surface. In the closed position of the first piston, the first tapered lateral surface is arranged essentially parallel to the second tapered lateral surface. Furthermore, the first seal is arranged between the first tapered lateral surface and the second tapered lateral surface such that the first seal is pressed between the first and second surfaces thus providing a fluid-tight sealing between the first and second surfaces. The first seal may be fixed at the first tapered lateral surface. For example, the first seal may comprise an O-ring arranged in a groove at the first tapered lateral surface. In other words, the first piston provides in combination with the inner wall section of the passage of the housing a poppet valve. The poppet valve may provide a robust sealing inhibiting a fluid flow in the direction from the second port to the first port. On the other hand, when the pressure inside the subsea pressure canister increases and is larger than a pressure outside the canister, the poppet valve may be easily opened by the pressure difference.

According to another embodiment, the second piston has a cylindrical outer shape and the passage comprises an inner wall section having a cylindrical inner shape. In the closed position of the second piston, the second piston is fitted into the inner wall section. Furthermore, in the closed position of the second piston, the second seal may be arranged between the cylindrical outer surface of the second piston and the cylindrical inner surface of the inner wall section of the passage. More precisely, the cylindrical second piston may be arranged within a tubular section of the passage with the second seal providing a fluid-tight sealing between the second piston and the passage. The passage may comprise furthermore an enlarged inner wall section arranged between the tubular inner wall section and the second port. An inner circumference of the enlarged inner wall section is larger than an inner circumference of the tubular inner wall section. In the open position of the second piston, the second piston is arranged at least partly within the enlarged inner wall section, especially, the second piston is arranged such that the second seal is arranged between the cylindrical outer surface of the second piston and the enlarged inner wall section. Due to the larger inner circumference of the enlarged inner wall section, a fluid-tight sealing is not provided anymore by the second seal and thus a fluid may pass along the passage in the open position of the second piston.

Furthermore, the second piston may comprise a position indicator extending from the second piston in a longitudinal direction of the passage. The piston indicator protrudes from the housing when the second piston is in its open position. As described above, when the second piston is moved from the closed position to the open position, the position indicator is moved together with the second piston in the longitudinal direction of the passage and protrudes from the housing such that the position of the second piston can be visually perceived from outside of the valve and therefore also from outside of the subsea pressure canister. Furthermore, as in the open position of the second piston, the second seal is arranged in the enlarged inner wall section, even when the pressure difference between the first port and the second port is balanced, the second piston may remain in the open position and thus the position indicator indicates that the valve has been in the open position before. Thus, after retrieving the subsea pressure canister from subsea, a technician can easily recognise that a pressure relief has occurred.

According to another embodiment, the valve comprises furthermore a spring to bias the first piston into the closed position. The spring may be configured to keep the first piston in the closed position until a pressure difference between a pressure at the first port and the intermediate space crosses a predetermined pressure threshold. The pressure threshold may comprise a value in a range from 1 to 10 bar (100,000 to 1,000,000 Pa). By biasing the first piston with the spring, the valve will open only in case of a significant overpressure within the subsea pressure canister thus avoiding an unnecessary opening of the valve.

According to another embodiment, the second piston is arranged spaced apart from the first piston and the first piston is movable independently from the second piston. By providing a space between the first piston and the second piston, which may be filled with a fluid like silicon oil, a pressure balance between the pistons and the sealings may be achieved. Furthermore, as the first piston and the second piston are movable independently from each other, the first piston may be moved back via the spring after a pressure relief whereas the second piston may remain in the open position to indicate via the position indicator that a pressure relief has occurred.

Finally, according to the present invention, a subsea pressure container comprising the valve described above is provided.

Although specific features described in the above summary and the following detailed description are described in connection with specific embodiments and aspects of the present invention, it should be understood that the features of the exemplary embodiments and aspects can be combined with each other unless specifically noted otherwise.

### Brief Description of the Drawings

The present invention will now be described in more detail with reference to the accompanying drawings.
Fig. 1 shows schematically a subsea pressure canister according to an embodiment of the present invention.
Fig. 2 shows schematically a perspective view of a valve according to an embodiment of the present invention.
Fig. 3 shows schematically a top view of the valve of Fig. 2.
Fig. 4 shows schematically a sectional view of the valve of Fig. 2 in a closed condition.
Fig. 5 shows schematically a sectional view of the valve of Fig. 2 in an open condition.

### Detailed Description of Preferred Embodiments

In the following, exemplary embodiments of the invention will be described in more detail. It is to be understood that the features of the various exemplary embodiments described herein may combined with each other unless specifically noted otherwise. Same reference signs in the various drawings refer to similar or identical components.

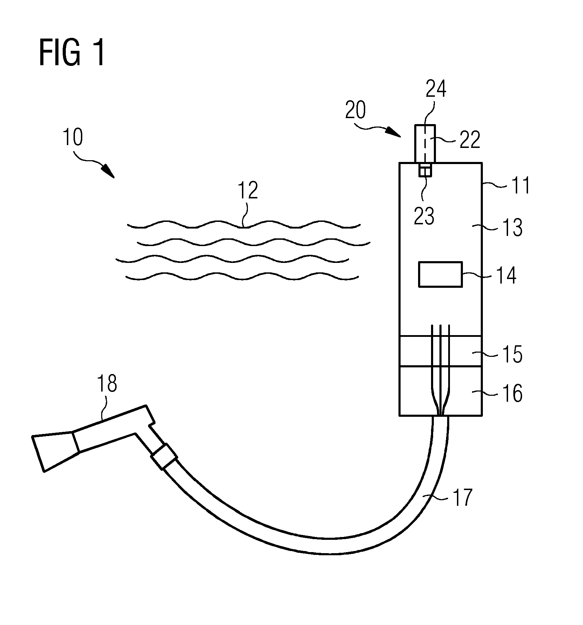

Fig. 1 shows schematically a subsea pressure canister 11 in a typical subsea environment 10. The subsea canister or subsea vessel 11 may be used for housing components 14 in an interior 13 for protecting the components 14 from high pressure present in deep sea water 12. For coupling the components 14 with other equipment, the subsea canister 11 may comprise a port 16, for example an oil-filled pressure compensated chamber 16, and an electrical penetrator 15 providing electrical lines arranged in an oil-filled conduit 17. The other end of the conduit 17 may comprise a connector 18 for coupling the conduit to another subsea or land based equipment.

The canister 11 may be arranged in deep water, for example in a depth of 3,000 metres. Therefore, a pressure exerted on the canister 11 by the seawater 12 may become as large as for example 300 bar. For enabling operation of standard components 14 in such a harsh environment, the subsea pressure canister 11 may provide a pressure in the interior 13 of the canister 11 of for example approximately one bar. In the event that the subsea pressure canister 11 leaks while being arranged subsea and is then retrieved from subsea to an environment of normal atmospheric pressure relatively rapidly, it may still contain a very high pressure resulting from the leakage subsea. Such a pressurised canister may explode when being exposed or opened. Therefore, a pressure relief valve 20 is arranged at the canister 11 comprising a first port 23 in a fluid communication with the interior 13 of the canister 11 and a second port 24 in a fluid communication with the environment of the canister 11. A passage 22 is extending between the first port 23 and the second port 24. When the pressure difference between a pressure at the first port and a pressure at the second port 24 crosses a predefined threshold, the valve 20 opens and a high pressure from the interior 13 of the canister 11 is released via the passage 22 into the environment. However, the valve 20 is closed when the pressure outside the canister 11 is higher than the pressure inside the canister 11 to avoid introduction of for example seawater 12 into the canister 11 when the canister 11 is arranged and operated in the subsea environment 10.

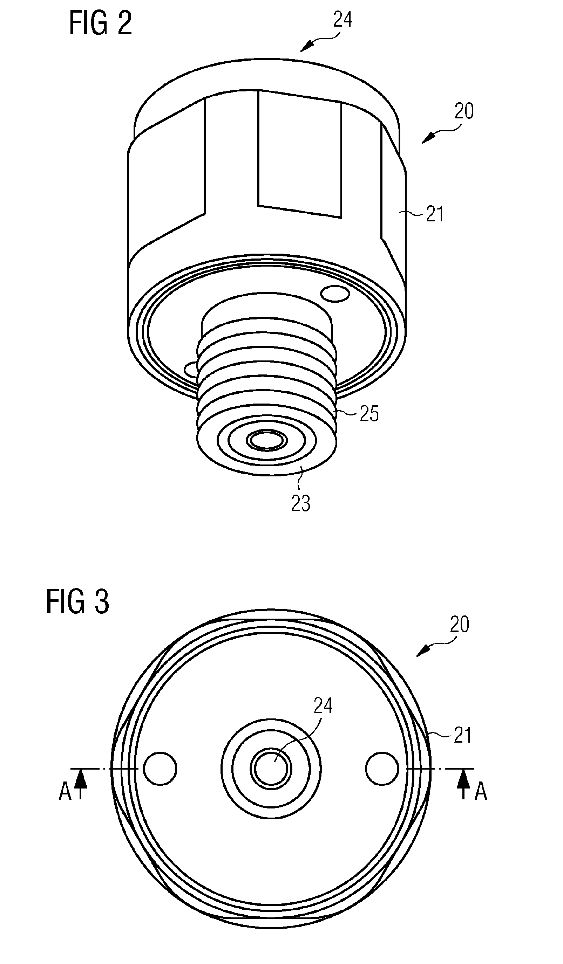

Fig. 2 shows the valve 20 in more detail. The valve 20 comprises a housing or body 21 in which the above described check valve mechanism is arranged to control the fluid flow from the first port 23 to the second port 24. At the housing 21, a threaded section 25 is formed to enable mounting the valve 20 at the canister 11.

Fig. 3 shows a top view of the valve 20. A diameter of the valve may be in the range of 10 to 30 millimetres, preferably 18 millimetres. The length of the valve may be in the range from 20 to 40 millimetres, preferably 28 millimetres.

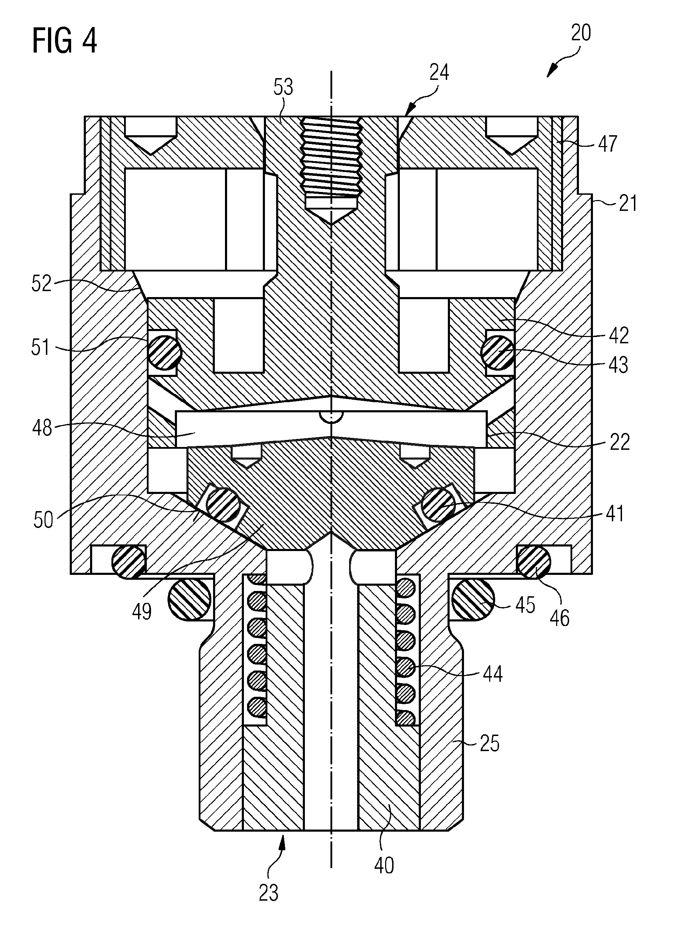

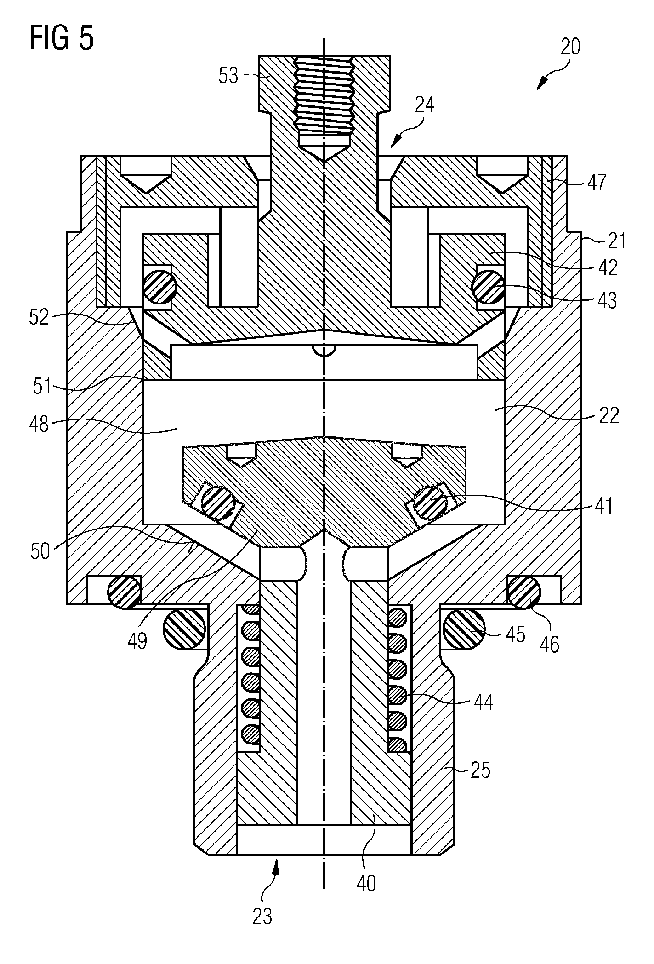

Figs. 4 and 5 show a sectional view of the valve 20 along the line A-A of Fig. 3. The valve 20 comprises at an outside of the housing 21 two seals 45 and 46, for example O-rings, for providing a fluid-tight sealing between the housing 21 and the canister 11 when the valve 20 is mounted at the canister 11 as shown in Fig. 1. The housing 21 provides a passage 22 which extends from the first port 23 to the second port 24. Inside of the passage 22 a first piston 40 and a second piston 42 are arranged. The first piston 40 is movable between a closed position as shown in Fig. 4 and an open position as shown in Fig. 5. The second piston 42 is movable between a closed position shown in Fig. 4 and an open position shown in Fig. 5. The pistons 40 and 42 are not coupled directly with each other such that they may be moved independently from each other. Therefore, there is a space in the passage 22 between the first piston 40 and the second piston 42 which will be called in the following intermediate space 48. Within the passage 22 near the first port 23, a spring 44 is arranged which biases the first piston 40 such that the first piston 40 is urged by the spring 44 into the closed position, i.e. downwards in Figs. 4 and 5. For assembling the valve 20, the housing 21 comprises a main body and a cap 47 arranged at an upper end of the main body. The second port 24 is formed as a hole in the cap 47. The second piston 42 comprises an extension 53 which protrudes through the second port 24 at the cap 47 in the open position of the second piston 42 as shown in Fig. 5, and which does not protrude from the cap 47 in the closed position of the second piston 42 as shown in Fig. 4. Thus, the extension 53 acts as a position indicator indicating the position of the second piston 42. Finally, a first seal 41 is arranged in a continuous groove at the first piston 40 and a second seal 43 is arranged in a continuous groove at the second piston 42.

Operation of the valve 20 will be described in connection with Fig. 4 and 5 in the following in more detail.

Fig. 4 shows the valve 20 in the closed position. A conical tapered surface 49 of the first piston 40 is arranged in parallel to a complimentary tapered surface 50 of the housing 21. In a groove arranged along the conical tapered surface 49 in a circumferential direction the first seal 41 is arranged. Due to a pressure exerted by the spring 44 on the first piston 40 in a downward direction in Fig. 4, the first seal 41 is pressed against the tapered surface 50. Therefore, a fluid communication between the first port 23 and the intermediate space 48 is interrupted. The second piston 42 has a cylindrical shape and the second seal 43 is arranged in a groove in a circumferential direction of the cylindrical surface such that the second seal 43 is in contact with a cylindrical inner wall 51 of the housing 21. Due to an elastic pressure of the second seal 43, a sealing between the second piston 42 and the cylindrical section 51 of the housing 21 is achieved, and a fluid communication between the second port 24 and the intermediate space 48 is interrupted. The intermediate space 48 is filled with a fluid, for example a silicon oil.

When the valve 20 is arranged at the canister 11, and the canister 11 is immersed subsea, the pressure at the second port 24 rises with respect to a pressure inside the canister at the first port 23. The higher outer pressure at the second port 24 urges the second piston 42 in Fig. 4 in a downward direction. Due to the fluid in the intermediate space 48, also the first piston 40 is pressed in a downward direction. Due to the fact that the fluid in the intermediate space 48 is essentially incompressible, the volume of the intermediate space 48 remains essentially unchanged and therefore the distance between the second piston 42 and the first piston 40 remains unchanged. However, due to the high pressure urging the first piston 40 in the downward direction, a reliable sealing is achieved prohibiting intrusion of seawater from the second port 24 into the canister 11. The second seal 43 is pressure balanced due to the fluid in intermediate space 48. This balancing compensation may eliminate essentially pressure differentials on the second seal 43 to maintain the second seal 43 operable for sealing purposes during life time of the valve 20.

Under normal conditions, when the canister 11 does not leak and the canister 11 is brought back to the surface such that the pressure at the port 24 corresponds essentially to the pressure at the port 23, the valve 20 does not open and even when the pressure inside the canister rises somewhat above the outside pressure at port 24, the valve 20 does not open due to the biasing force exerted on the first piston 40 by the spring 44.

However, in case in subsea conditions the canister 11 leaks, the pressure inside the canister may increase far above one atmosphere. When the canister 11 is then brought back to the surface rapidly, a considerably higher pressure than one atmosphere would be present inside the canister without the valve 20, for example some 10 or some 100 atmosphere or bar. However, when the pressure inside the canister 11 rises with respect to the outside pressure, the valve 20 opens as shown in Fig. 5. For example, the spring 44 may be dimensioned such that the valve 20 opens when the pressure at the first port 23 is 1 to 10 bar higher than the pressure at the second port 24. The higher inside pressure at the first port 23 urges the first piston 40 in Fig. 4 in an upward direction resulting in a space between the tapered surfaces 49 and 50, and the first seal 41 loses contact to the tapered surface 50. Fluid from inside the canister 11 flows through the first port 23 along the tapered surfaces 49 and 50 into the intermediate space 48. This increases the pressure in the intermediate space 48 and the second piston 42 is urged in an upward direction. The cylindrical surface 51 changes over to a conical tapered surface 52 as shown in Figs. 4 and 5. When the second piston 42 is being urged in the upward direction, the second seal 43 is moved from the cylindrical surface 51 to the tapered surface 52 and beyond. Thus, the sealing of the second seal 43 leaks and a fluid communication between the intermediate space 48 and the second port 24 is provided. Finally, the higher pressure from inside the canister 11 can be reliably released via the passage 22 of the valve 20 to the second port 24.

The position indicator 53 is coupled to the second piston 42 and moves therefore along with the second piston 42 in an upward direction when the valve 20 is opened. In the open position of the second piston 42, the position indicator 53 protrudes from the upper surface of the housing 21 of the valve 20. Thus, a person handling the canister 11 can immediately determine that the valve 20 has opened. When the pressure between the inside and the outside of the canister is balanced, the first piston 40 may be urged back into its closed position by the spring 44 preventing seawater from intruding into the canister. However, the second piston 42 may remain in the open position as shown in Fig. 5 still indicating that the valve 20 has opened in the meantime.

The above-described pressure relief valve 20 may be designed for a working depth of 3000 metres. The housing 21, the first piston 40, and the second piston 42 may be made of titanium or a stainless steel, for example AISI 316. The bias force of the spring 44 may be configured such that the valve 20 opens at a pressure difference, a so-called crack pressure, of 1 to 10 bar. The passage 22 may be designed such that in the open state of the valve 20 a fluid flow of at least 0.5 litre per minute of gas or water may be achieved at a pressure difference of 10 bar.

## Claims

1. A valve for a subsea pressure canister, comprising:
- a housing (21) comprising a passage (22) extending between a first port (23) and a second port (24) of the valve (20),
- a first piston (40) arranged within the passage (22) and movable between a closed position and an open position,
- a first seal (41) to provide a sealing between the first piston (40) and the passage (22) in the closed position of the first piston (40),
- a second piston (42) arranged within the passage (22) and movable between a closed position and an open position, and
- a second seal (43) to provide a sealing between the second piston (42) and the passage (22) in the closed position of the second piston.

2. The valve according to claim 1, wherein, in the closed position of the first piston (40), the first seal (41) and the first piston (40) are arranged to hydraulically isolate the first port (23) from an intermediate space (48) provided in the passage (22) between the first piston (40) and the second piston (42), and
wherein, in the closed position of the second piston (42), the second seal (43) and the second piston (42) are arranged to hydraulically isolate the second port (24) from the intermediate space (48).

3. The valve according to claim 2, wherein the intermediate space (48) is filled with a fluid, in particular with a liquid.

4. The valve according to claim 3, wherein the fluid comprises oil or silicon oil.

5. The valve according to claim 3 or 4, wherein the first piston (40) is arranged relative to the second piston (42) such that, when the first piston (40) is moving from the closed position to the open position, the first piston (40) displaces the fluid such that the fluid displaces the second piston (42) from the closed position to the open position.

6. The valve according to any one of the preceding claims, wherein the first piston (40) has a truncated conical shape providing a first tapered lateral surface (49), and the passage (22) comprises an inner wall section having a truncated conical shape providing a second tapered lateral surface (50),
wherein, in the closed position of the first piston (40), the first tapered lateral surface (49) is arranged in parallel to the second tapered lateral surface (50), wherein the first seal (41) is sealingly pressed between the first tapered lateral surface (49) and the second tapered lateral surface (50).

7. The valve according to claim 6, wherein the first seal (41) is fixed at the first tapered lateral surface (49).

8. The valve according to any one of the preceding claims, wherein the second piston (42) has a cylindrical outer shape and the passage (22) comprises an inner wall section (51) having a cylindrical inner shape,
wherein, in the closed position of the second piston (42), the second piston (42) is fitted into the inner wall section (51).

9. The valve according to claim 8, wherein, in the closed position of the second piston (42), the second seal (43) is arranged between the cylindrical outer shape of the second piston (42) and the cylindrical inner shape of the inner wall section (51) of the passage (22).

10. The valve according to claim 8 or 9, wherein the passage (22) comprises furthermore an enlarged inner wall section (52) arranged between the inner wall section (51) and the second port (24), wherein an inner circumference of the enlarged inner wall section (52) is larger than an inner circumference of the inner wall section (51),
wherein, in the open position of the second piston (42), the second piston (42) is arranged at least partly within the enlarged inner wall section (52).

11. The valve according to any one of the preceding claims, further comprising:
- a spring (44) to bias the first piston (40) into the closed position.

12. The valve according to claim 2 and 11, wherein the spring (44) is configured to keep the first piston (40) in the closed position until a pressure difference between a pressure at the first port (23) and a pressure at the intermediate space (48) crosses a predetermined pressure threshold.

13. The valve according to claim 12, wherein the predetermined pressure threshold has a value in a range from 100,000 to 1,000,000 Pa.

14. The valve according to any one of the preceding claims, wherein the second piston (42) is arranged spaced apart from the first piston (40) and the first piston (40) is movable independently from the second piston (42).

15. The valve according to any one of the preceding claims, wherein the second piston (42) comprises a position indicator (53) extending from the second piston (42) in a longitudinal direction of the passage (22), wherein the position indicator (53) protrudes from the housing (21) when the second piston (42) is in its open position.
